Europäisches Patentamt

European Patent Office

Office européen des brevets

(19)

(11) **EP 0 907 052 A2**

(12) **EUROPÄISCHE PATENTANMELDUNG**

(43) Veröffentlichungstag:
   **07.04.1999 Patentblatt 1999/14**

(51) Int. Cl.⁶: **F23N 1/02**

(21) Anmeldenummer: **98113154.3**

(22) Anmeldetag: **15.07.1998**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **16.09.1997 DE 19740666**

(71) Anmelder: **KARL DUNGS GMBH & CO.**
   **D-73660 Urbach (DE)**

(72) Erfinder: **Moses, Johann**
   **73614 Schorndorf (DE)**

(74) Vertreter:
   **KOHLER SCHMID + PARTNER**
   **Patentanwälte**
   **Ruppmannstrasse 27**
   **70565 Stuttgart (DE)**

(54) **Pneumatischer Verhältnisregler**

(57) Bei einer Regelvorrichtung (1) für das Einhalten eines zumindest nahezu stets gleichen Verhältnisses $((p_{Br}-p_F)/(p_L-p_F))$ zwischen dem Druck $(p_{br})$ eines ersten, insbesondere gasförmigen Fluids, vorzugsweise eines Brenngases (2), und dem Druck $(p_L)$ eines zweiten, insbesondere gasförmigen Fluids, vorzugsweise von Luft (3), kurz vor ihrer Zusammenführung in einen Mischungsraum, vorzugsweise in einen Feuerraum (4) eines Gasbrenners (5), unabhängig von dem im Mischungsraum gegenüber den Drücken $(p_{Br}, p_L)$ der beiden Fluide herrschenden Unterdruck $(p_F)$, mit einer in den Mischungsraum führenden Hauptleitung (8) für das erste Fluid und mit einem Druckregler (12), der den in der Hauptleitung (8) herrschenden Eingangsdruck des ersten Fluids in Abhängigkeit des geforderten Druckverhältnisses einstellt, ist von der Hauptleitung (8) stromabwärts eines Stellelements (11) des Druckreglers (12) eine ebenfalls in den Mischungsraum führende Bypassleitung (13) mit zwei hintereinander angeordneten Drosseln (14, 15) abgezweigt, wobei der zwischen den zwei hintereinander angeordneten Drosseln (14, 15) herrschende, reduzierte Druck $(p_{red})$ des ersten Fluids dem Druckregler (12) als Regelgröße zugeführt wird. Diese Regelvorrichtung ermöglicht eine korrekte Zumessung in einem großen Betriebslastbereich auf nichtmechanische Weise mit wenigen Bauteilen und bei besonders kleinem Bauraum.

Fig. 1

EP 0 907 052 A2

**Beschreibung**

Die Erfindung betrifft eine Regelvorrichtung für das Einhalten eines zumindest nahezu stets gleichen Verhältnisses zwischen dem Druck eines ersten, insbesondere gasförmigen Fluids, vorzugsweise eines Brenngases, und dem Druck eines zweiten, insbesondere gasförmigen Fluids, vorzugsweise von Luft, kurz vor ihrer Zusammenführung in einen Mischungsraum, vorzugsweise in einen Feuerraum eines Gasbrenners unabhängig von dem im Mischungsraum gegenüber den Drücken der beiden Fluide herrschenden Unterdruck, mit einer in den Mischungsraum führenden Hauptleitung für das erste Fluid und mit einem Druckregler, der den in der Hauptleitung herrschenden Eingangsdruck des ersten Fluids in Abhängigkeit des geforderten Druckverhältnisses einstellt.

Eine derartige Einstellvorrichtung ist z.B. durch die DE 25 47 075 C3 bekanntgeworden.

Zur Regelung der Brenngas- und Verbrennungsluftzufuhr zu Gasfeuerungsanlagen sind Gas/Luft-Verbundregler bekannt, die dafür sorgen, daß das Gas/Luft-Druckverhältnis von einem für eine optimale Verbrennung gewünschten Wert im gesamten Leistungsbereich der Gasfeuerungsanlage so wenig wie möglich abweicht. Die Menge des der Gasfeuerung zugeführten Gas/Luft-Gemisches hängt von der jeweils gerade geforderten Heizleistung ab, die in großen Bereichen schwanken kann.

Es sind bereits Verbundregler bekannt, bei denen sich die Gaszumessung nach dem Druckverlust an einer Drosselstelle richtet.

Beim sogenannten "mechanischen Gas-Luftverbund" werden, um die Leistung zu verändern, die Querschnitte von Gas und Luft gleichermaßen verändert. Nachteilig daran ist allerdings der große technische Aufwand.

Bei der sogenannten "Nulldruckregelung" wird der Druckverlust an einer Gasdüse in etwa gleich gewählt wie der Druckverlust an einer Luftdüse. Dadurch wird das Mischungsverhältnis unabhängig vom Durchsatz. Allerdings muß hier der Gasdruck recht niedrig gewählt werden, was zu größeren Ungenauigkeiten und zu einem kleinen Leistungsbereich führt.

Um die Leistung zu verändern, wird beim sogenannten "pneumatischen Verbundregler" der Druck des Gases anhand des Druckverlustes an einer Drosselstelle verändert, um stets das gleiche Mischungsverhältnis zu erreichen. Zur Verhältnisbildung werden in der Regel zwei Membranen und ein Vergleichs-Waagehebel benötigt. Gemeinsam ist allen pneumatischen Verbundreglern auch die Möglichkeit der Berücksichtigung der Drücke im Feuerraum der Gasfeuerungsanlage, so daß die für den Massestrom vom Brenner in den Feuerraum ausschlaggebende Druckdifferenz bei der Gasgemischzusammensetzung berücksichtigt werden kann.

Die Wirkungsweise eines derartigen pneumatischen Verbundreglers, wie sie beispielsweise aus der eingangs genannten DE 25 47 075 C3 bekannt ist, basiert auf der Gleichgewichtsbildung zwischen den beiden Momenten der Kräfte an der Luftmembran mal Hebelarm der Luftseite und der Kräfte an der Gasmembran mal Hebelarm der Gasseite eines Waagehebels, wobei sowohl der Luftmembran als auch der Gasmembran der Druck im Feuerraum entgegenwirkt. Entsprechend der Stellung des Waagehebels wird mittels eines in der Gasleitung vorgesehenen Gasventils die Gaszufuhr eingestellt. Durch Verstellen des Auflagepunkts des Waagebalkens längs des Waagebalkens läßt sich das Gas/Luft-Druckverhältnis mechanisch einstellen, was konstruktiv sehr aufwendig ist.

Der vorliegenden Erfindung liegt demgegenüber die Aufgabe zugrunde, eine Regelvorrichtung der eingangs genannten Art dahingehend weiterzubilden, daß das gewünschte stets gleiche Druckverhältnis zwischen dem ersten Fluid (Brenngas) und dem zweiten Fluid (Luft) kurz vor dem gemeinsamen Mischungsraum (Feuerraum) möglichst einfach und mit wenigen Bauteilen eingestellt werden kann.

Diese Aufgabe wird erfindungsgemäß dadurch gelöst, daß von der Hauptleitung stromabwärts eines Stellelements des Druckreglers eine ebenfalls in den Mischungsraum führende Bypassleitung mit zwei hintereinander angeordneten Drosseln abgezweigt ist, wobei der zwischen den zwei hintereinander angeordneten Drosseln herrschende, reduzierte Druck des ersten Fluids dem Druckregler als Regelgröße zugeführt wird.

Diese Regelvorrichtung erlaubt eine preisgünstige Zumessung des Brenngases in nahezu immer dem richtigen Verhältnis zur zuströmenden Verbrennungsluft bei Gasbrennern oder allgemein bei Geräten bzw. Maschinen, die ein bestimmtes Gemisch aus einem ersten und einem zweiten Fluid benötigen. Diese Regelvorrichtung ermöglicht diese korrekte Zumessung in einem großen Betriebslastbereich auf nichtmechanische Weise mit wenigen Bauteilen und bei besonders kleinem Bauraum.

Der geregelte Druck des ersten Fluids strömt durch die beiden Drosseln (z.B. Düsen) in den Mischungsraum. Dadurch, daß im stationären Zustand derselbe Massestrom beide Drosseln passiert, stellt sich ein festes Druckverhältnis zwischen den Drosseln ein, das nur durch das Verhältnis ihrer Drosselquerschnitte bestimmt wird. Durch die erste Drossel gelangt der stromaufwärts des Stellelements herrschende Fluiddruck im gewünschten Verhältnis reduziert als Regelgröße an den Druckregler. Dadurch regelt der Druckregler nicht - wie üblich - z.B. auf Nulldruck, sondern auf einen höheren Druck, der durch das Verhältnis der Druckverluste an den beiden Drosseln bestimmt wird. Durch dieses Verhältnis der Drosselquerschnitte ist das gewünschte Druckverhältnis der beiden Fluide bestimmt.

Bei ganz besonders bevorzugten Ausführungsformen der Erfindung ist das Verhältnis der Drosselquerschnitte der zwei hintereinander angeordneten Drosseln veränderbar, um die gleiche Regelvorrichtung bei Bedarf auch auf ein anderes Druckverhältnis der beiden Fluide einstellen zu können. Zum Beispiel können Drosseln mit unterschiedlichen Querschnitten gegeneinander austauschbar sein.

In besonders vorteilhafter Weiterbildung dieser Ausführungsform ist der Drosselquerschnitt von zumindest einer Drossel kontinuierlich verstellbar, um das Druckverhältnis innerhalb gewisser Grenzen beliebig einstellen zu können. Als kontinuierlich wirkende Drossel kann z.B. eine in den Strömungsquerschnitt einschraubbare Stellschraube vorgesehen sein.

Weiterhin kann der Drosselquerschnitt von zumindest einer Drossel auch durch Zu- oder Umschalten einer oder mehrerer weiterer Drosseln veränderbar sein.

Bei bevorzugten Ausführungsformen der Erfindung weist der Druckregler eine Regelmembran auf, deren eine Seite mit dem reduzierten Druck des ersten Fluids und deren andere Seite mit dem Druck des zweiten Fluids beaufschlagt ist, so daß das Stellelement des Druckreglers den Druck des ersten Fluids entsprechend der Druckdifferenz zwischen dem reduziertem Druck des ersten Fluids und dem Druck des zweiten Fluids einstellt.

Dazu kann das den stromaufwärts der Bypassleitung herrschenden Eingangsdruck einstellende Stellelement des Druckreglers in Antriebsverbindung mit der Regelmembran stehen. Zum Beispiel können Stellglied und Regelmembran miteinander starr verbunden sein.

Bevorzugt ist dabei das Stellelement des Druckreglers entgegen der Schwerkraft und dem stromaufwärtigen Eingangsdruck des ersten Fluids kraftbeaufschlagt, insbesondere federbeaufschlagt, so daß entsprechend dem über die Drosselquerschnitte eingestellten Druckverhältnis eine resultierende Kraft wirkt, welche das den ersten Fluidstrom steuernde Stellelement lediglich gegen z.B. die Kraft einer Feder mehr oder weniger weit öffnet.

Bei ganz besonders bevorzugten Ausführungsformen der Erfindung ist der Druckregler ein Nulldruckregler. Ausgangspunkt kann ein konventioneller Nulldruckregler sein, dessen Druckmeßstelle nicht wie üblich direkt am Ausgang des ersten Fluids liegt, sondern der Druck des ersten Fluids gelangt durch die erste Drossel im gewünschten Verhältnis reduziert als Regelgröße an den Druckregler. Dadurch regelt der Nulldruckregler nicht wie üblich die Druckdifferenz zwischen Luft- und Gasdruck auf Null, sondern auf einen höheren Druck, der durch das Verhältnis der Druckverluste an beiden Drosseln bestimmt ist.

Vorzugsweise weist der Nulldruckregler eine Nulldruckjustage auf. Durch Verändern z.B. einer Federvorspannung am Druckregler (Nulldruckjustage) kann eine leistungsabhängige Veränderung des Mischungsverhältnisses erreicht werden. Sie beeinflußt bevorzugt den unteren Leistungsbereich.

Der Druckregler kann auch als Servodruckregler ausgebildet sein. Dabei kann das den stromaufwärts der Bypassleitung herrschenden Eingangsdruck einstellende Stellelement des Servoreglers über das erste Fluid entsprechend der Differenz zwischen dem reduzierten Druck des ersten Fluids und dem Druck des zweiten Fluids betätigt werden.

Die Drosseln können, insbesondere bei Neugeräten, bereits in den Druckregler integriert sein, oder auch in einem separaten Drosselteil vorgesehen sein, das an einen herkömmlichen Druckregler anschließbar ist.

Die Erfindung betrifft auch ein separates Drosselteil mit mindestens zwei hintereinander angeordneten Drosseln für die oben beschriebene Regelvorrichtung, wobei das Drosselteil an einen herkömmlichen Druckregler anschließbar ist. Durch das Drosselteil wird die Druckmeßstelle des ersten Fluids z.B. bei einem konventionellen Nulldruckregler nicht wie üblich direkt mit dem Druck des ersten Fluids beaufschlagt sondern wird durch die erste Drossel im gewünschten Verhältnis reduziert auf das Stellglied des Druckreglers geleitet. Dadurch regelt der Gasdruckregler nicht auf Nulldruck, wie üblich, sondern auf einen höheren Druck, der durch das Verhältnis der Druckverluste an den beiden Drosseln bestimmt wird. Dieses Drosselteil kann die oben beschriebenen einstellbaren, austauschbaren oder um- bzw. zuschaltbaren Drosseln aufweisen.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:

Fig. 1 eine schematische Darstellung eines Gebläsebrenners, dem mittels einer erfindungsgemäßen Regelvorrichtung Brenngas und Luft im stets korrekten Druckverhältnis unabhängig vom jeweiligen Leistungsbereich des Gebläsebrenners zugeführt wird;

Fig. 2 einen Schnitt durch ein erstes Ausführungsbeispiel einer erfindungsgemäßen Regelvorrichtung mit pneumatischer Druckverhältnisbildung für einen Gas/Luft-Verbund; und

Fig. 3 einen Schnitt durch ein zweites Ausführungsbeispiel einer erfindungsgemäßen Regelvorrichtung mit pneumatischer Druckverhältnisbildung für einen Gas/Luft-Verbund.

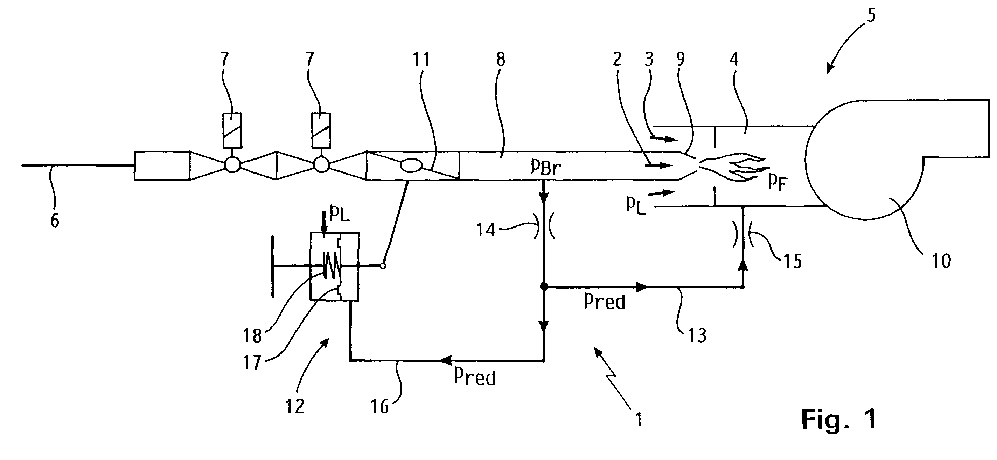

In Fig. 1 ist mit **1** eine erfindungsgemäße Regelvorrichtung zum automatischen Einstellen des richtigen Druckverhältnisses zwischen einem Brenngas (erstes Fluid) **2** und Luft (zweites Fluid) **3** bezeichnet, kurz bevor sie getrennt voneinander in einen gemeinsamen Feuerraum (Mischungsraum) **4** eines Gasbrenners **5** eingeleitet werden.

Das über eine Gasleitung **6** zugeführte Brenngas **2** strömt nach Passieren zweier Sicherheitsventile **7** in eine Hauptleitung **8** ein, aus der es über eine Gasdüse **9** in den Feuerraum **4** austritt. In dem Feuerraum **4** ist mittels eines Gebläses **10** ein Unterdruck (Feuerraumgegendruck) $p_F$ erzeugt, so daß das Brenngas **2** und atmosphärische Luft **3** angesaugt werden. Die Leistung des Gasbrenners **5** wird durch unterschiedliche Drehzahlen des Gebläsemotors, d.h. durch einen geänderten Unterdruck $p_F$ eingestellt. Über ein Stellelement **11** in der Hauptleitung **8**, das Teil eines Druckreglers **12** ist, kann der in der Hauptleitung **8** vor der Gasdüse **9** herrschende Brenngasdruck $p_{Br}$ eingestellt werden.

Von der Hauptleitung **8** ist zwischen Stellelement 11 und Gasdüse 9 eine Bypassleitung **13** abgezweigt, die ebenfalls in den Feuerraum **4** führt. In der Bypassleitung 13 sind hintereinander zwei Drosseln **14** und **15** angeordnet, zwischen denen ein reduzierter Brenngasdruck $p_{red}$ herrscht. Dieser reduzierte Brenngasdruck $p_{red}$ wird über eine zwischen den Drosseln 14, 15 befindliche Leitung **16** dem Druckregler 12 als Regelgröße zugeführt, der entsprechend dem Druckverhältnis $p_L/p_{Br}$ zwischen dem Luftdruck $p_L$ am Gasbrenner **5** und dem reduzierten Brenngasdruck $p_{red}$ über das Stellelement 11, z.B. über ein Gasventil, den Brenngasdruck $p_{Br}$ in der Hauptleitung 8 einstellt. Dazu steht das Stellelement 11 in Antriebsverbindung mit einer Regelmembran **17** im Druckregler 12, auf deren eine Seite der reduzierte Brenngasdruck $p_{red}$ und auf deren andere Seite der Luftdruck $p_L$ wirkt. Eine Rückstellkraft der Regelmembran 17 kann durch Verändern der Vorspannung einer die Regelmembran 17 kraftbeaufschlagenden Feder **18** eingestellt werden (Nulldruckjustage). Der Druckregler 12 ist in etwa auf Nulldruck eingestellt, so daß eine Betätigung des Stellelements 11 nur pneumatisch durch die anliegenden Drücke, $p_L$ und $p_{red}$, erfolgt. D.h., das Stellelement 11 wird solange immer weiter geöffnet oder geschlossen, bis an der Regelmembran 17 keine Druckdifferenz mehr wirkt.

Das Brenngas **2** in der Hauptleitung **8** strömt außer über die Gasdüse 9 auch über die beiden Drosseln 14, 15 in den Feuerraum **4** ein. Da dabei derselbe Massestrom beide Drosseln 14, 15 passiert, stellt sich ein festes Druckverhältnis zwischen beiden Drosseln 14, 15 ein, das nur durch das Verhältnis ihrer Drosselquerschnitte bestimmt ist. Zwischen den beiden Drosseln 14, 15 herrscht im stationären Arbeitspunkt in etwa $p_L$, d.h. $p_{red} = p_L$, weil der Druckregler 12 sonst den Gasdruck $p_{Br}$ noch korrigieren müßte.

Somit wird der Gasdruck $p_{Br}$ nach folgender vereinfachter Gleichung gebildet:

$$p_{Br} - p_F = (n+1) \times (p_L - p_F),$$

wobei n das Querschnittsverhältnis zwischen der ersten Drossel 14 und der zweiten Drossel 15 angibt. Im folgenden werden gleich große Drosselquerschnitte (n = 1) angenommen und Druckwerte als Relativdrücke bezüglich dem absoluten Luftdruck angegeben.

Wenn im Feuerraum **4** ein Druck von $p_F = -10$ mbar und in der Hauptleitung **8** ein Druck von $p_{Br} = 10$ mbar herrschen, beträgt der reduzierte Druck zwischen den Drosseln 14, 15 $p_{red} = 0$ mbar. Da an der Reglermembran 17 keine Druckdifferenz zwischen $p_L = 0$ mbar und $p_{red}$ ansteht, ist der stationäre Zustand erreicht, und für das Druckverhältnis gilt: $(p_{Br} - p_F)/(p_L - p_F) = 2$.

Wird nun die Leistung des Gebläsebrenners **5** durch eine geringere Drehzahl des Gebläses **10** verringert, so verringert sich der Druck im Feuerraum **4** z.B. auf $p_F = -5$ mbar. Da in der Hauptleitung **8** noch ein Brenngasdruck $p_{Br} = 10$ mbar und somit zwischen den Drosseln 14, 15 ein reduzierter Druck $p_{red} = 2,5$ mbar herrschen, wird aufgrund dieser auch an der Regelmembran 17 herrschenden Druckdifferenz der Druckregler 12 das Stellelement 11 so weit schließen, bis $p_{red} = 0$ mbar erreicht ist. Dieser stationäre Zustand für die geringere Leistung stellt sich ein, wenn der Brenngasdruck $p_{Br}$ durch das Stellelement 11 in der Hauptleitung **8** auf $p_{Br} = 5$ mbar reduziert ist. Auch dann gilt für das Druckverhältnis $(p_{Br} - p_F)/(p_L - p_F) = 2$.

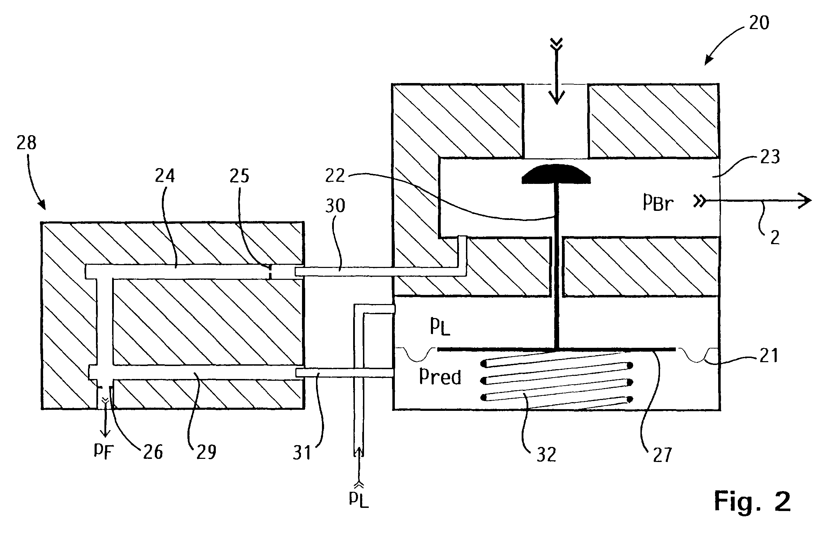

In Fig. 2 ist ein konventioneller Nulldruckregler **20** gezeigt, dessen Regelmembran **21** nicht wie üblich mit dem stromabwärts des Stellelements **22** in der Hauptleitung **23** herrschenden Gasdruck $p_{Br}$, sondern über die Bypassleitung **24** mit dem durch die beiden Drosseln **25**, **26** im gewünschten Verhältnis reduzierten Gasdruck $p_{red}$ beaufschlagt ist. Auf die andere Seite der Regelmembran 21 wirkt der Luftdruck $p_L$, und das Stellelement 22 ist mit einem Membranteller **27** der Regelmembran 21 starr verbunden. Die Drosseln 25, 26 sind in einem separaten Drosselteil **28** vorgesehen, wobei die Bypassleitung 24 und die Leitung **29** des Drosselteils 28 an entsprechende Außenanschlüsse **30**, **31** des Nulldruckreglers 20 angeschlossen sind. Eine auf den Membranteller 27 wirkende Feder **32** dient zur Kompensation der Schwerkraft und des auf das Stellelement 22 wirkenden stromaufwärtigen Gaseingangsdrucks.

Wie oben beschrieben, regelt dieser Nulldruckregler **20** nicht wie üblich auf Nulldruck, sondern auf einen höheren Druck, der durch das Verhältnis der Druckverluste an den beiden Drosseln 25, 26 bestimmt wird. Das Druckverhältnis kann variabel sein, indem verschiedene Drosseln oder eine einstellbare Drossel verwendet werden.

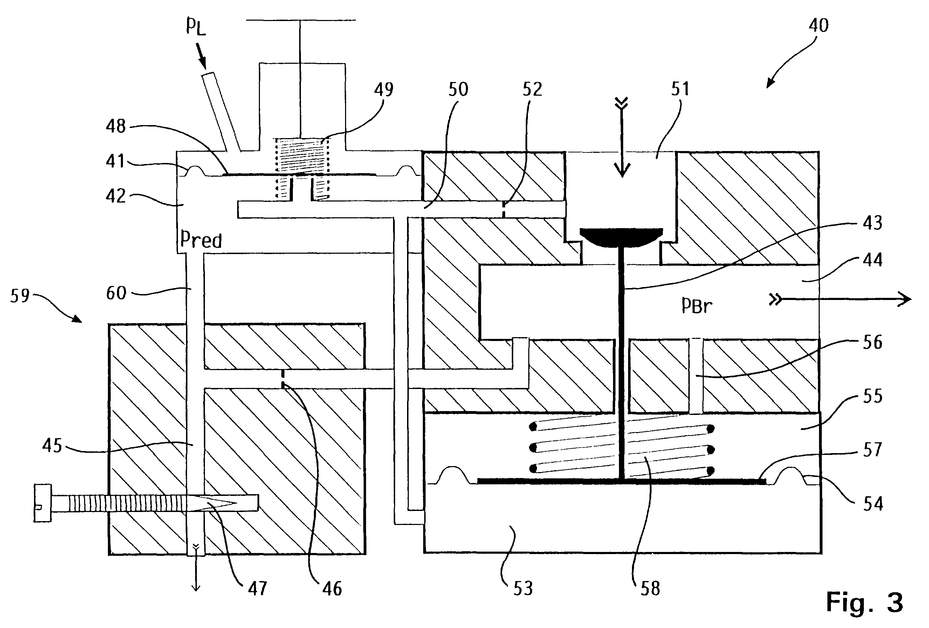

In Fig. 3 ist ein Servodruckregler **40** mit einer Regelmembran **41** gezeigt, deren unterer Arbeitsraum

42 nicht wie üblich mit dem stromabwärts des Stellelements **43** in der Hauptleitung **44** herrschenden Gasdruck $p_{Br}$, sondern über die Bypassleitung **45** mit dem durch die beiden Drosseln **46, 47** im gewünschten Verhältnis reduzierten Gasdruck $p_{red}$ beaufschlagt ist. Auf die andere Seite der Regelmembran **41** wirkt der Luftdruck $p_L$ Ein mit der Regelmembran **41** verbundener Membranteller **48** regelt entsprechend dem Verhältnis $p_{red}/p_L$ und der Vorspannung durch die Feder **49** das Abströmen des Brenngases innerhalb einer in den unteren Arbeitsraum **42** mündenden Servoleitung **50**. Diese Servoleitung **50** ist stromaufwärts des Stellelements **43** von der Gasleitung **51** abgezweigt und über eine Drossel **52** druckreduziert mit dem unteren Arbeitsraum **53** einer Stellmembran **54** verbunden, deren anderer oberer Arbeitsraum **55** über eine Entlastungsbohrung **56** mit der Kauptleitung **44** verbunden ist. Ein Membranteller **57** der Stellmembran **54** ist, durch eine Feder **58** vorgespannt, starr mit dem Stellelement **43** verbunden. Die Drosseln **46, 47** sind in einem separaten Drosselteil **59** vorgesehen, wobei die Bypassleitung **45** und die zum unteren Arbeitsraum **42** führende Leitung **60** des Drosselteils **59** an entsprechende Außenanschlüsse (nicht dargestellt) des Servodruckreglers **40** angeschlossen sind.

Wie oben beschrieben, regelt auch dieser Servodruckregler **40** nicht wie üblich auf Nulldruck, sondern auf einen höheren Druck, der durch das Verhältnis der Druckverluste an den beiden Drosseln **46, 47** bestimmt wird. Mit Hilfe der als Stellschraube ausgebildeten zweiten Drossel **47** ist der Drosselquerschnitt kontinuierlich verstellbar und damit das Druckverhältnis in gewissen Grenzen beliebig einstellbar.

## Patentansprüche

1. Regelvorrichtung (1) für das Einhalten eines zumindest nahezu stets gleichen Verhältnisses $((p_{Br}\text{-}p_F)/(p_L\text{-}p_F))$ zwischen dem Druck $(p_{br})$ eines ersten, insbesondere gasförmigen Fluids, vorzugsweise eines Brenngases (2), und dem Druck $(p_L)$ eines zweiten, insbesondere gasförmigen Fluids, vorzugsweise von Luft (3), kurz vor ihrer Zusammenführung in einen Mischungsraum, vorzugsweise in einen Feuerraum (4) eines Gasbrenners (5), unabhängig von dem im Mischungsraum gegenüber den Drücken $(p_{Br}, p_L)$ der beiden Fluide herrschenden Unterdruck $(p_F)$, mit einer in den Mischungsraum führenden Hauptleitung (8; 23; 45) für das erste Fluid und
mit einem Druckregler (12; 20; 40), der den in der Hauptleitung (8) herrschenden Eingangsdruck des ersten Fluids in Abhängigkeit des geforderten Druckverhältnisses einstellt,
dadurch gekennzeichnet,

daß von der Hauptleitung (8; 23; 45) stromabwärts eines Stellelements (11; 22; 43) des Druckreglers (12; 20; 40) eine ebenfalls in den Mischungsraum führende Bypassleitung (13; 24; 44) mit zwei hintereinander angeordneten Drosseln (14, 15; 25, 26; 46, 47) abgezweigt ist, wobei der zwischen den zwei hintereinander angeordneten Drosseln (14, 15; 25, 26; 46, 47) herrschende, reduzierte Druck $(p_{red})$ des ersten Fluids dem Druckregler (12; 20; 40) als Regelgröße zugeführt wird.

2. Regelvorrichtung nach Anspruch 1, dadurch gekennzeichnet, daß das Verhältnis (n) der Drosselquerschnitte der zwei hintereinander angeordneten Drosseln (14, 15; 25, 26; 46, 47) veränderbar ist.

3. Regelvorrichtung nach Anspruch 2, dadurch gekennzeichnet, daß der Drosselquerschnitt von zumindest einer Drossel (47), vorzugsweise kontinuierlich, verstellbar ist.

4. Regelvorrichtung nach Anspruch 2 oder 3, dadurch gekennzeichnet, daß der Drosselquerschnitt von zumindest einer Drossel (14, 15; 25, 26; 46, 47) durch Zu- oder Umschalten einer oder mehrerer weiterer Drosseln veränderbar ist.

5. Regelvorrichtung nach einem der vorhergehenden Ansprüche, dadurch gekennzeichnet, daß der Druckregler (12; 20; 40) eine Regelmembran (17; 21; 41) aufweist, deren eine Seite mit dem reduzierten Druck $(p_{red})$ des ersten Fluids und deren andere Seite mit dem Druck $(p_L)$ des zweiten Fluids beaufschlagt ist.

6. Regelvorrichtung nach Anspruch 5, dadurch gekennzeichnet, daß das den stromaufwärts der Bypassleitung (13; 24) herrschenden Eingangsdruck einstellende Stellelement (11; 22) des Druckreglers (12; 20) in Antriebsverbindung mit der Regelmembran (17; 41) steht.

7. Regelvorrichtung nach Anspruch 6, dadurch gekennzeichnet, daß das Stellelement (11; 22) des Druckreglers (12; 20) entgegen der Schwerkraft und dem stromaufwärtigen Eingangsdruck des ersten Fluids kraftbeaufschlagt, insbesondere federbeaufschlagt ist.

8. Regelvorrichtung nach einem der vorhergehenden Ansprüche, dadurch gekennzeichnet, daß der Druckregler (20) ein Nulldruckregler ist.

9. Regelvorrichtung nach Anspruch 8, dadurch gekennzeichnet, daß der Nulldruckregler (20) eine Nulldruckjustage aufweist.

10. Regelvorrichtung nach einem der vorhergehenden Ansprüche, dadurch gekennzeichnet, daß der Druckregler (40) als Servodruckregler ausgebildet ist.

11. Regelvorrichtung nach einem der vorhergehenden Ansprüche, dadurch gekennzeichnet, daß die Drosseln (14, 15) im Druckregler (12) integriert sind.

12. Regelvorrichtung nach einem der Ansprüche 1 bis 10, dadurch gekennzeichnet, daß die Drosseln (25, 26; 46, 47) in einem separaten Drosselteil (28; 59) vorgesehen sind, das an einen herkömmlichen Druckregler (20, 40) anschließbar ist.

13. Drosselteil (28; 59) mit mindestens zwei hintereinander angeordneten Drosseln (25, 26; 45, 46) für eine Regelvorrichtung (1) nach einem der Ansprüche 1 bis 10, dadurch gekennzeichnet, daß es an einen herkömmlichen Druckregler (20, 40) anschließbar ist.

EP 0 907 052 A2

Fig. 1

**Fig. 2**

EP 0 907 052 A2

EP 0 907 052 A2

Fig. 3